# FASCICULE DE BREVET EUROPEEN

(11) **EP 3 825 220 B1**
(45) Date de publication et mention de la délivrance du brevet: **12.06.2024**
(21) Numéro de dépôt: 20208391.1
(22) Date de dépôt: 18.11.2020
(51) Int. Cl.: B63B 17/00, F16B 9/02, H01M 10/625

(54) **SYSTÈME DE FIXATION D'UNE PLURALITÉ DE PACKS BATTERIE DE FAÇON EMPILÉE LES UNS SUR LES AUTRES À BORD D'UN NAVIRE COMPRENANT DES CROISILLONS, BLOC D'ALIMENTATION ET PROCÉDÉ DE FIXATION ASSOCIÉS**
SYSTEM ZUM SICHERN MEHRERER ÜBEREINANDER GESTAPELTER BATTERIEPAKETE AN BORD EINES SCHIFFES MIT QUERVERSTREBUNGEN, STROMVERSORGUNGSEINHEIT UND SICHERUNGSVERFAHREN DAFÜR
FIXING SYSTEM OF A PLURALITY OF BATTERY PACKS STACKED ON EACH OTHER IN A VESSEL COMPRISING BRACES, ASSOCIATED ALIMENTATION BLOC AND FIXING METHOD

(30) Priorité: 19.11.2019 FR 1912873
(43) Date de publication de la demande: 26.05.2021
(73) Titulaire: Naval Group, 75015 Paris (FR)
(72) Inventeur: BODET, Ludovic, 56100 LORIENT (FR); FERAL, Hervé, 56311 LORIENT (FR); MAHE, Erwan, 56311 LORIENT (FR)
(74) Mandataire: Lavoix

(56) Documents cités:
- EP-A1- 3 547 398
- WO-A1-2019/028512
- DE-C1- 19 628 398
- FR-A5- 2 185 115

## Description

La présente invention concerne un système de fixation d'une pluralité de packs batterie de façon empilée les uns sur les autres à bord d'un navire. Ce système comprend notamment une pluralité croisillons.

La présente invention concerne également un bloc d'alimentation et un procédé de fixation associés.

Par navire, on entend tout engin apte à naviguer sur la surface maritime (tel qu'un bateau) et éventuellement submersible (tel qu'un sous-marin).

De manière connue en soi, pour mettre en oeuvre ses différentes fonctionnalités, les navires utilisent souvent de l'énergie électrique stockée dans des batteries embarquées.

Ces batteries se présentant généralement sous la forme de packs d'accumulateurs, appelés également packs batterie, doivent être adaptées au fonctionnement dans un environnement très instable, présentant parfois des chocs importants.

Cet environnement peut également subir des dilations importantes liées à des conditions thermiques variables.

Ainsi, pour assurer une bonne fixation des packs batterie dans un tel environnement, il est connu d'installer ces packs dans un local spécial adapté à cet effet.

En particulier, il est connu d'utiliser des crochets sur le fond des packs batterie permettant de les accrocher au plancher du local et ainsi, de les bloquer verticalement.

Un autre système de fixation est par exemple décrit dans le document FR 2 185 115 A5.

Pour assurer un blocage horizontal, il est connu d'utiliser des calles, coins, tasseaux, etc. entre différents packs batterie ou alors entre ces packs batterie et les murs du local.

On conçoit alors que cela impose de nombreuses contraintes d'installation de ces packs batterie. Ces contraintes imposent par exemple l'installation des packs batterie en une seule couche ce qui conduit, bien entendu, à des pertes d'espace importantes.

La présente invention a pour but de remédier à ces inconvénients et de proposer un système de fixation permettant d'installer des packs batterie de façon empilée les uns sur les autres et cela dans un environnement très instable.

À cet effet, l'invention a pour objet un bloc d'alimentation selon la revendication 1.

Suivant d'autres aspects avantageux de l'invention, le bloc d'alimentation selon l'une quelconque des revendications 2 à 12.

La présente invention a également pour objet un procédé de fixation d'une pluralité de packs batterie selon la revendication 13.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique en perspective d'une coque d'un navire en coupe transversale, la coque définissant un local batterie ;
- [Fig 2] la figure 2 est une vue schématique en perspective d'un pack batterie destiné à être installé dans le local batterie de la figure 1 au moyen d'un système de fixation selon l'invention ;
- [Fig 3] la figure 3 est une vue agrandie du détail III de la figure 2 ;
- [Fig 4] la figure 4 est une vue schématique en perspective (à gauche) et en coupe (à droite) d'un croisillon selon un premier exemple de réalisation de l'invention ;
- [Fig 5] la figure 5 est une vue schématique en perspective (à gauche) et en coupe (à droite) d'un croisillon selon un deuxième exemple de réalisation de l'invention ;
- [Fig 6] la figure 6 est une vue agrandie du détail VI de la figure 1, ladite vue faisant apparaître notamment une pluralité de rails simples et un rail latéral taraudé faisant partie du système de fixation l'invention ;
- [Fig 7] la figure 7 est une vue schématique en perspective d'une pluralité de règles taraudées faisant partie du système de fixation l'invention ;
- [Fig 8] la figure 8 est une vue schématique en perspective de moyens de fixation d'une dernière couche de packs batterie selon un premier mode de réalisation de l'invention ;
- [Fig 9] la figure 9 est une vue schématique d'un bloc d'alimentation selon l'invention, le bloc d'alimentation comprenant une pluralité de packs batterie de la figure 2 et le système de fixation selon l'invention permettant de fixer ces packs batterie dans le local batterie de la figure 1 ;
- [Fig 10] la figure 10 est une vue schématique en perspective de moyens de fixation d'une dernière couche de packs batterie selon un deuxième mode de réalisation de l'invention ; et
- [Fig 11] la figure 11 est une vue agrandie du détail XI de la figure 10.

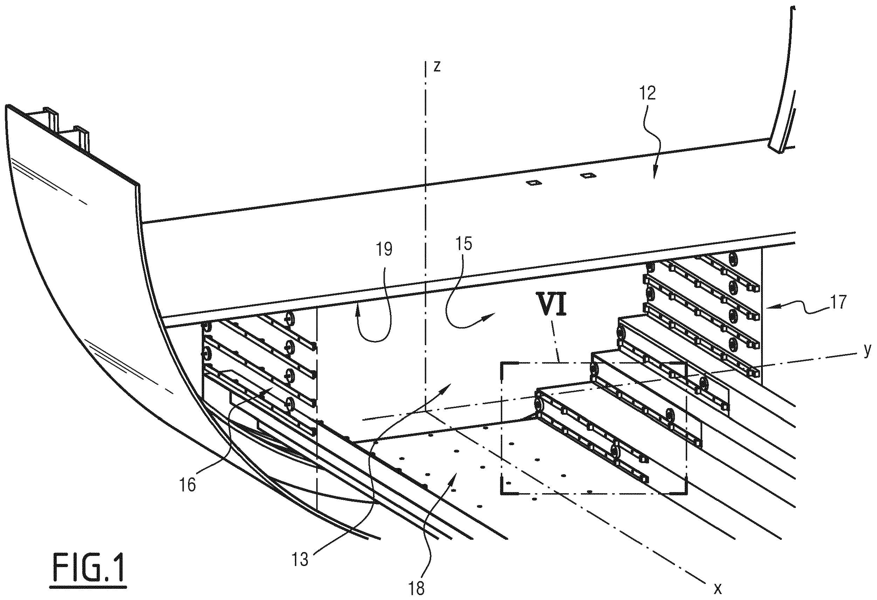

On a en effet représenté sur la figure 1 une coque 10 d'un navire.

Par navire, il est entendu tout engin se déplaçant sur la surface maritime tel qu'un bateau ou un engin submersible tel qu'un sous-marin.

La coque 10 présente une forme étendue selon un axe central. Cet axe sera dénoté par la suite comme axe X.

L'axe X est perpendiculaire à un axe transversal qui sera alors dénoté par la suite comme axe Y.

Dans l'exemple de la figure 1, la coque 10 présente une forme générale cylindrique dont seulement la partie basse est visible sur la figure 1. Cette partie basse présente une forme arrondie définissant notamment un arc de cercle dans chaque coupe transversale.

Bien entendu, dans un cas général, la coque 10 peut présenter toute autre forme connue d'un navire.

La figure 1 fait par ailleurs apparaître une paroi 12 s'étendant transversalement par rapport à la coque 10 dans un plan formé par les axes X et Y.

Cette paroi 12 délimite un local batterie 13 disposé dans la partie basse de la coque 12.

La longueur du local 13 s'étend selon l'axe X entre deux murs dont seulement un est visible sur la figure 1. Ce mur sera appelé par la suite mur de fond 15.

La largeur du local 13 s'étend selon l'axe Y et est délimitée par deux murs latéraux 16 et 17.

Enfin, la hauteur du local 13 s'étend selon un axe Z perpendiculaire aux axes X et Y, entre un plancher 18 et un plafond 19.

Le mur de fond 15 est par exemple sensiblement plat.

Le plafond 19 est également par exemple sensiblement plat et est formé par une partie de la paroi 12 disposée en regard du local batterie 13.

Quant aux murs latéraux 16, 17 et le plancher 18, ceux-ci présentent des surfaces cascadées selon la forme arrondie de la coque 10 en formant ainsi des marches.

En particulier, comme cela est visible sur la figure 1, chacun des murs latéraux 16, 17 présente une portion plate adjacente au plafond 19 et une portion cascadée adjacente au plancher 18.

La portion cascadée de chacun des murs latéraux 16, 17 présente ainsi une pluralité de surfaces plates s'étendant selon l'axe X et écartées les unes par rapport aux autres selon l'axe Y. Ces surfaces plates forment alors des parties verticales des marches ou des contremarches.

De manière analogue, le plancher 18 présente une portion plate et une portion cascadée.

La portion cascadée est également constituée d'une pluralité de surfaces plates qui s'étendent dans ce cas selon l'axe X et sont écartées les unes par rapport aux autres selon l'axe Z. Ces surfaces plates forment alors des parties horizontales des marches.

Sur la figure 1, les murs latéraux 16, 17 et le plancher 18 définissent trois marches de côté de chaque mur latéral 16, 17.

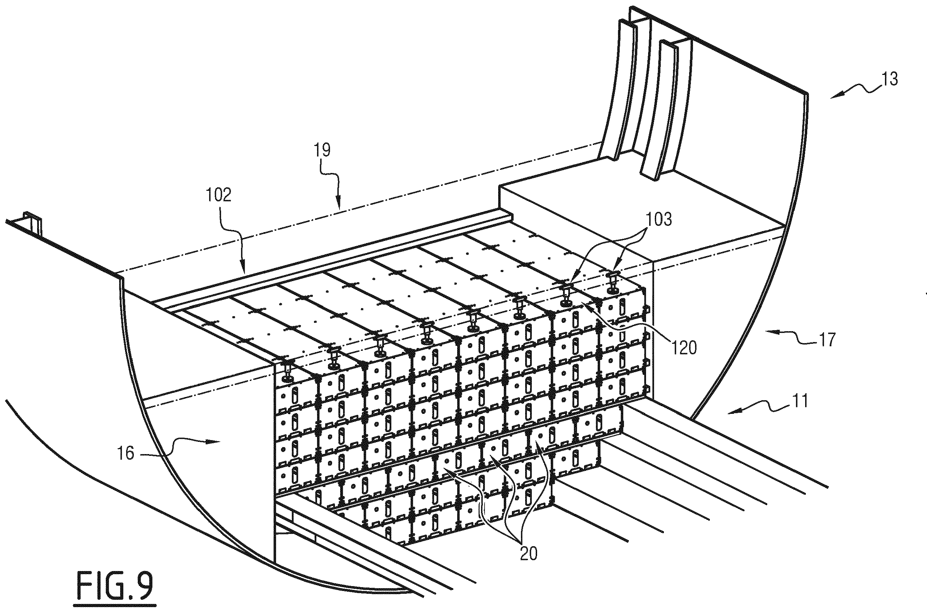

Le local batterie 13 est adapté pour recevoir un bloc d'alimentation 11 selon l'invention. Ce bloc d'alimentation dans l'état assemblé est visible sur la figure 9 et comprend notamment une pluralité de packs batterie 20.

Ces packs batterie 20 sont par exemple sensiblement analogues entre eux.

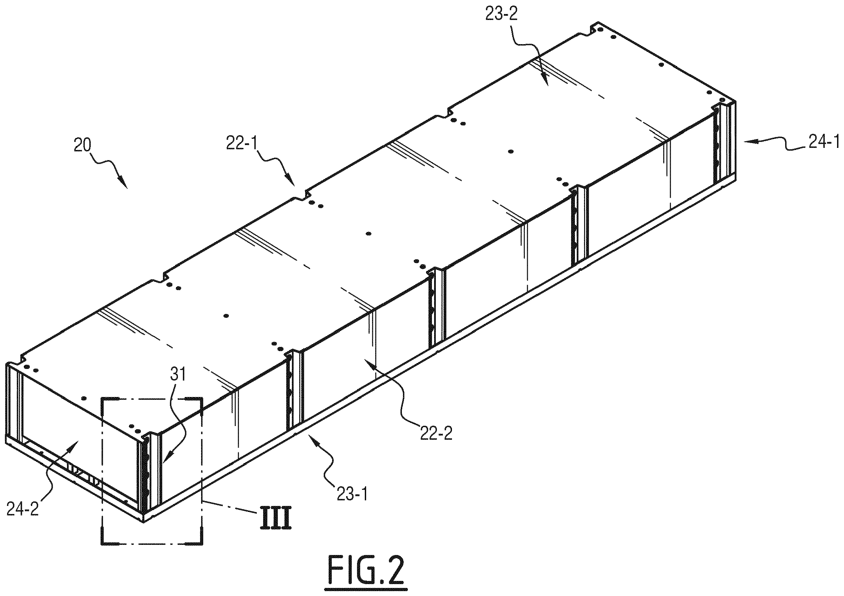

L'un de ces packs 20 est illustré sur la figure 2.

En particulier, comme cela est visible sur cette figure 2, le pack batterie 20 présente une forme sensiblement parallélépipédique.

Autrement dit, le pack batterie 20 définit deux parois latérales désignées sur la figure 2 sous les références 22-1 et 22-2.

Le pack batterie 20 définit en outre une paroi inférieure 23-1 et une paroi supérieure 23-2 ainsi qu'une paroi proximale 24-1 et une paroi distale 24-2.

Les packs batterie 20 sont destinés à être posés dans le local batterie 13 de manière empilée les uns sur les autres.

Ainsi, les packs batterie 20 définissent une pluralité de couches et une pluralité de rangées.

Chacune des couches s'étend dans un plan défini par les axes X et Y entre les murs latéraux 16, 17.

Chacune des rangées s'étend entre le plancher 18 et la plafond 19.

Au sein d'une même rangée, les packs batterie 20 peuvent être alignés selon l'axe Z ou alors peuvent être posés en quinconce, comme cela sera expliqué par la suite.

Ainsi, la paroi inférieure 23-1 de chacun des packs batterie 20 est destinée à être posée sur le plancher 18 ou sur la paroi supérieure 23-2 d'un ou de deux pack(s) batterie d'une couche de packs batterie inférieure.

De la même façon, la paroi supérieure 23-2 de chaque pack batterie 20 est destinée à servir de base de fixation pour une couche de packs batterie supérieure ou alors de bloquer l'ensemble de packs batterie contre le plafond 19.

Par ailleurs, compte tenu des marches formées par les murs 16, 17 et le plancher 18, le nombre de packs batterie 20 dans les couches est variable.

Ce nombre augmente par exemple avec chaque couche jusqu'à devenir constant à partir d'une certaine couche.

Ainsi, par exemple, lorsque les packs batterie sont posés en sept couches, les quatre premières couches comportent un nombre croissant de packs batterie 20 et les trois dernières couches comportent le même nombre de packs batterie 20 que la quatrième couche.

En revenant à la description de la figure 2, la paroi distale 24-2 du pack batterie 20 est destinée à être posée contre le mur de fond 15 du local batterie 13.

La paroi proximale 24-1 est destinée à être libre dans le local batterie 13. En particulier, cette paroi 24-1 permet à l'opérateur faisant le montage et la maintenance de l'ensemble des packs batterie de fixer chaque pack batterie 20, comme cela sera expliqué par la suite.

Chacune des parois latérales 22-1, 22-2 est destinée à entrer en contact soit avec une paroi latérale d'un pack batterie 20 adjacent de la même couche, soit avec l'un des murs latéraux 16, 17.

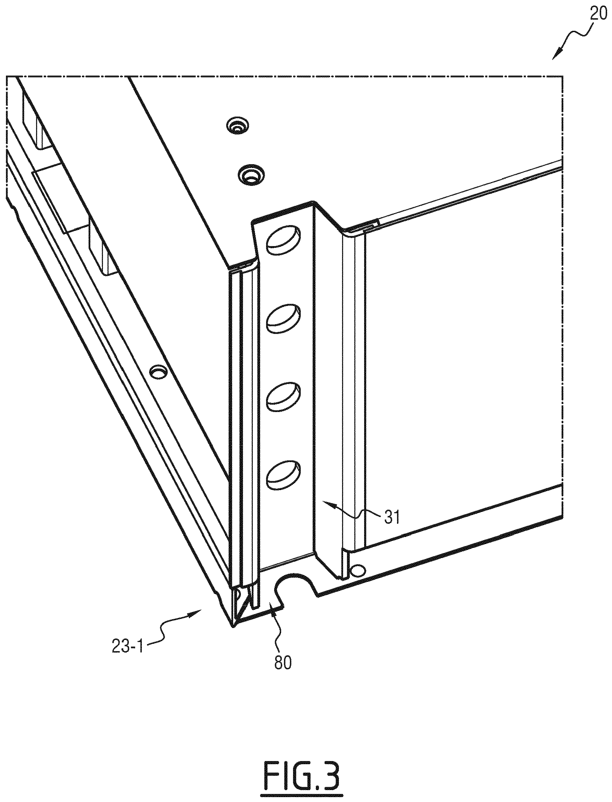

Pour ce faire, chacune des parois latérales 22-1, 22-2 définit une pluralité de rainures 31 de fixation. Un exemple d'une telle rainure 31 est visible sur la figure 3.

Ainsi, en référence à cette figure 3, la rainure 31 s'étend entre la paroi inférieure 23-1 et la paroi supérieure 23-2 du pack batterie 20 de manière perpendiculaire à ces parois.

Dans une coupe transversale, la rainure 31 présente par exemple un demi-carré. Ainsi, la rainure 31 présente une paroi de fond 32 et deux parois latérales 33, 34.

Dans l'exemple représenté sur la figure 2, cinq rainures 31 sensiblement identiques sont formées sur chaque paroi latérale 22-1, 22-2 du pack batterie 20.

Par ailleurs, dans le même exemple, une rainure 31 sur chacune des parois latérales 22-1, 22-2 est adjacente à la paroi distale 24-2 et une autre rainure 31 est adjacente à la paroi proximale 24-1.

Autrement dit, dans cet exemple, le pack batterie 20 définit deux rainures 31 adjacentes à la paroi proximale 24-1 et deux rainures 31 adjacentes à la paroi distale 24-2.

Les rainures 31 appartenant aux parois latérales 22-1, 22-2 de packs batterie différents sont disposées en regard les unes par rapport aux autres.

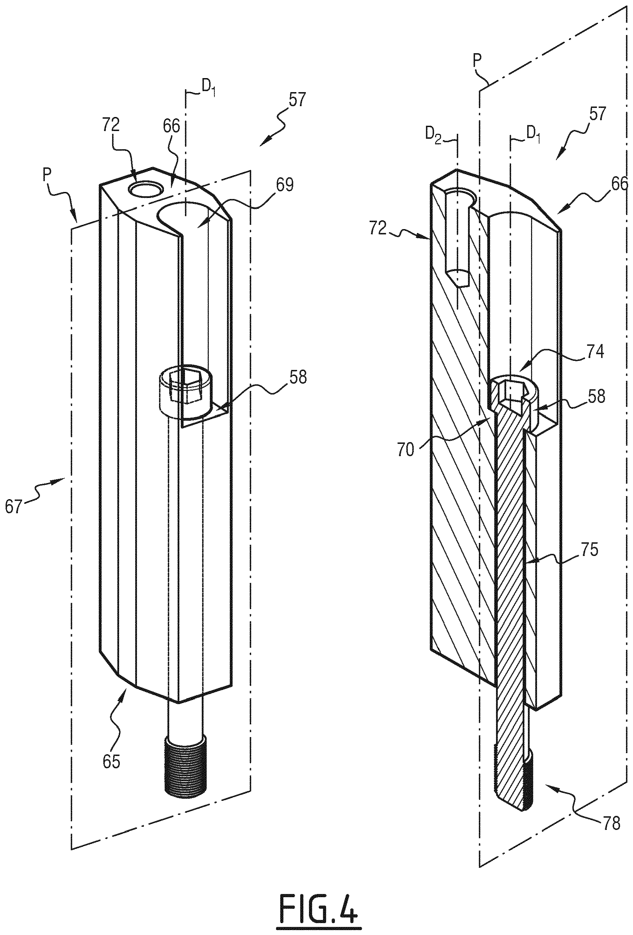

La fixation des packs batterie 20 en une pluralité de couches s'effectue au moyen d'un système de fixation selon l'invention faisant également partie du bloc d'alimentation 11 selon l'invention
Le système de fixation selon le premier mode de réalisation sera désormais expliqué en référence aux figures 4 à 9.

Ce système de fixation comprend une pluralité de croisillons 57, une pluralité de vis de fixation 58, une pluralité de rails latéraux simples 59, une pluralité de rails latéraux taraudés 60, une pluralité de règles taraudées 61 et des moyens de fixation 62 d'une dernière couche de packs batterie.

Les croisillons 57 sont destinés à être insérés dans des orifices formés entre chaque couple de rainures 31 en regard de deux packs batterie 20 mis l'un à côté de l'autre dans une même couche de packs batterie.

Les croisillons 57 sont par exemple sensiblement analogues entre eux.

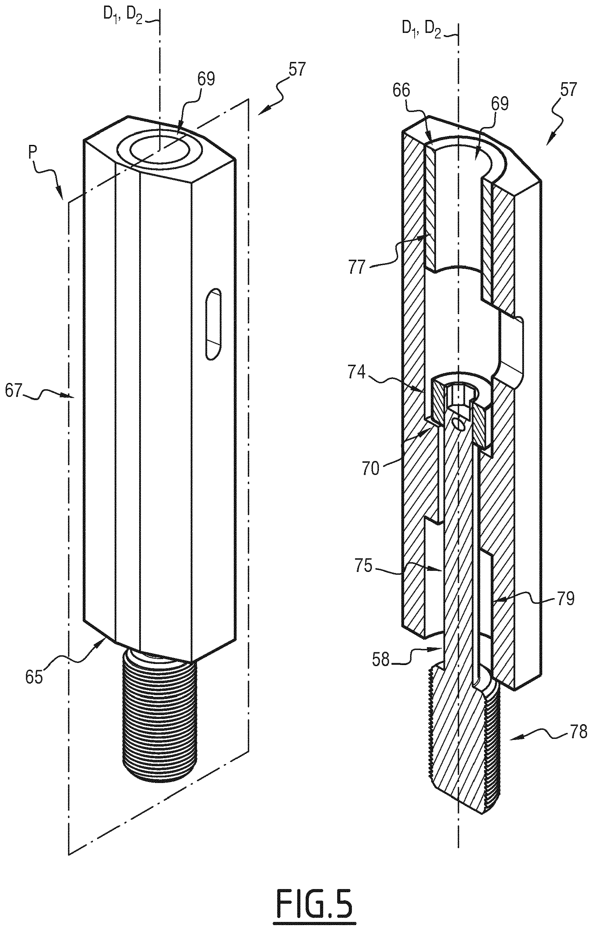

Ainsi par la suite, seul un croisillon 57 sera expliqué en détail en référence aux figures 4 et 5. En particulier, la figure 4 illustre un tel croisillon 57 selon un premier exemple de réalisation et la figure 5 illustre un tel croisillon 57 selon un deuxième exemple de réalisation.

En référence à la figure 4, le croisillon 57 selon le premier exemple de réalisation définit une paroi inférieure 65, une paroi supérieure 66 et quatre parois latérales 67.

Le croisillon 57 présente ainsi une forme extérieure adaptée pour être insérée dans un orifice formé entre deux rainures 31 en regard de deux packs batterie 20 mis l'un à côté de l'autre dans une même couche de packs batterie.

Ainsi, comme cela est visible sur la figure 4, la forme extérieure du croisillon 57 présente une forme symétrique par rapport à un plan central P.

Ce plan central P est disposé entre les parois latérales correspondantes des deux packs batterie 20 lorsque le croisillon 57 est inséré dans l'orifice formé entre deux rainures en regard de ces packs batterie 20.

Ainsi, de chaque côté de ce plan P, le croisillon 57 présente une forme complémentaire de celle de la rainure 31 dans laquelle il est destiné à être disposé.

La forme extérieure du croisillon 57 permet ainsi de mettre les parois latérales 67 de ce croisillon 57 en contact avec la surface intérieure de chaque rainure 31 dans laquelle il est disposé.

Dans sa partie intérieure, le croisillon 57 selon le premier exemple de réalisation définit un orifice traversant épaulé 69 s'étendant selon un axe d'orifice D₁ entre la paroi inférieure 65 et la paroi supérieure 66.

L'orifice 69 est agencé entièrement d'un seul côté du plan central P.

Autrement dit, l'axe d'orifice D₁ est compris dans un demi plan délimité par le plan central P et est parallèle à ce plan P.

L'orifice 69 est un orifice épaulé dans la mesure où il définit une butée interne 70 rétrécissant cet orifice.

En particulier, la partie de l'orifice 69 débouchant sur la paroi supérieure 66 du croisillon 57 présente un diamètre plus important que la partie de cette orifice débouchant sur la paroi inférieure 65 de ce croisillon 57. En outre, entre la butée 70 et chacune de ces parties, l'orifice 69 présente un diamètre sensiblement constant.

Le croisillon 57 définit en outre un trou taraudé 72 disposé à l'opposé de l'orifice traversant 69 par rapport au plan central P.

Ce trou taraudé 72 s'étend selon un axe du trou D₂ parallèle à l'axe d'orifice D₁. Ce trou taraudé 72 débouche seulement sur la paroi supérieure 66 du croisillon 57.

Les axes D₁ et D₂ sont disposés de manière symétrique par rapport au plan central P.

Le diamètre du trou taraudé 72 est par exemple inférieur à celui de la partie de l'orifice traversant 69 débouchant sur la paroi supérieure 66. Ce diamètre est par exemple sensiblement égal à celui de la partie de l'orifice traversant 69 débouchant sur la paroi inférieure 65 du croisillon 57.

L'orifice traversant 69 est ainsi adapté pour recevoir une vis de fixation 58 faisant partie du système de fixation selon l'invention.

Comme cela est visible sur la figure 4, cette vis 58 présente par exemple une étendue axiale sensiblement égale à l'étendue du croisillon 57.

Cette vis de fixation 58 présente notamment une tête de serrage 74, une tige 75 et une extrémité filetée 78.

Ainsi, l'orifice traversant 69 est adapté de sorte que la vis 58 puisse glisser librement le long de cet orifice lorsqu'elle est insérée à partir de la paroi supérieure 66 de ce croisillon, jusqu'à ce que sa tête de serrage 74 ne vienne en butée contre la butée interne 70. Dans ce cas, l'extrémité filetée 78 fait saillie par rapport à la paroi inférieure 65 du croisillon 57.

Ainsi, cette vis 58 peut être engagée dans un trou taraudé disposé au-dessous de l'orifice traversant 69.

Le trou taraudé 72 est apte à recevoir l'extrémité filetée d'une vis 58 lorsque celle-ci est disposée au-dessus de ce trou taraudé 72.

Comme cela est visible sur la figure 5, le croisillon 57 selon le deuxième exemple de réalisation présente sensiblement la même forme extérieure que le croisillon 57 selon le premier exemple de réalisation.

En particulier, comme dans le cas précédent, ce croisillon 57 selon le deuxième exemple de réalisation présente une paroi inférieure 65, une paroi supérieure 66 et des parois latérales 67.

Tout comme dans le cas précédent, ce croisillon 57 est adapté pour être reçu dans l'orifice formé entre deux rainures 31 en regard de deux packs batterie 20 mis l'un à côté de l'autre dans une même couche de packs batterie.

Également comme dans le cas précédent, les parois latérales 67 de ce croisillon 57 sont adaptées pour être en contact avec les parois intérieures des rainures 31 correspondantes lorsque ce croisillon 57 est reçu dans l'orifice formé entre ces rainures 31.

Contrairement au cas précédent, le croisillon 57 selon le deuxième exemple de réalisation présente une symétrie interne par rapport au plan central P.

Dans ce cas, l'orifice traversant épaulé 69 s'étend alors entre la paroi inférieure 65 et la paroi supérieure 66 selon l'axe d'orifice D₁ qui est compris dans le plan central P.

Dans ce deuxième exemple, dans la partie débouchant sur la paroi supérieure 66, l'orifice traversant 69 définit un logement qui est apte à recevoir une douille taraudée 77.

À l'intérieur, l'orifice traversant 69 définit une butée interne 70 analogue à celle selon le premier exemple de réalisation.

Tout comme dans le cas précédent, l'une des vis de fixation 58 est apte à être insérée dans l'orifice traversant 66 à partir de la paroi supérieure 66 de ce croisillon jusqu'à venir en butée contre la butée interne 70.

Ensuite, la douille taraudée 77 peut être insérée dans le logement adjacent à la paroi supérieure 66 du croisillon 57 pour former un trou taraudé qui est alors apte à recevoir l'extrémité filetée d'une autre vis 58.

Par ailleurs, dans l'exemple représenté sur la figure 5, l'extrémité filetée 78 présente par exemple une surépaisseur par rapport à la tige 75. Autrement dit, dans cet exemple, le diamètre de l'extrémité filetée 75 est supérieure à celui de la tige 75.

Dans ce cas, le croisillon 57 présente également un logement 79 adjacent à la paroi inférieure 65 du croisillon 57 qui est apte à recevoir l'extrémité filetée 78 de la vis 58.

Pour pouvoir insérer une telle vis dans le croisillon 57, la vis 58 présente par exemple une tête amovible 74 sous la forme d'un boulon. Ainsi, la vis 58 sans la tête 74 peut être insérée dans le trou 69 à partir de la paroi inférieure 65 du croisillon, puis la tête 74 peut être vissée sur la tige 75 à partir de la paroi supérieure 66 du croisillon 57.

Dans les deux exemples de réalisation du croisillon 57, la paroi inférieure 65 de celle-ci est adaptée pour venir en butée contre une butée inférieure 80 qui est formée dans chacune des rainures 31 de chaque pack batterie 20.

En particulier, une telle butée inférieure 80 est visible sur la figure 3.

Sur cette figure, la butée inférieure 80 est adjacente à la paroi inférieure 23-1 du pack batterie 20 correspondant, de sorte à former un rétrécissement de cette rainure 31.

Ainsi, lorsqu'un croisillon 57 est inséré dans l'orifice formé entre deux rainures 31 et est fixé dans cette position, la paroi inférieure 65 de ce croisillon 57 vient en butée contre la butée 80 ce qui permet de bloquer selon l'axe Z les packs batterie 20 correspondants.

Les rails latéraux simples 59 permettent de bloquer selon l'axe X les packs batterie adjacents aux parois latérales 16, 17 du local 13.

En particulier, ces rails latéraux simples sont disposés en regard des parois latérales 22-1 et 22-2 des packs batterie adjacents aux murs latéraux 16, 17 de chaque couche de packs batterie 20.

Ces rails latéraux simples 59 sont par exemple tous identiques entre eux.

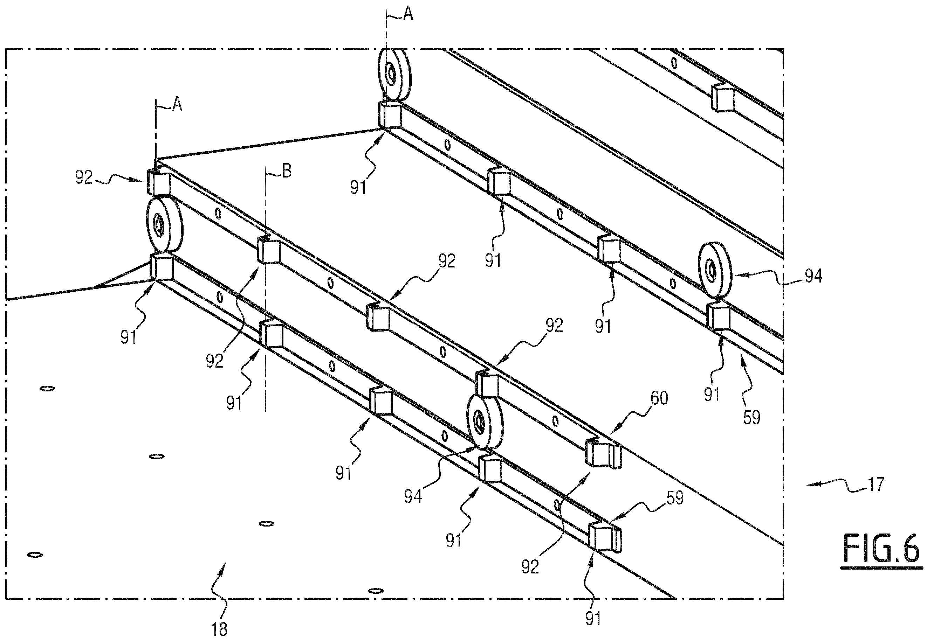

La figure 6 illustre deux rails latéraux simples 59 disposés respectivement sur une première et une deuxième contremarche formées sur le plancher 18.

Chacun de ces rails latéraux simples 59 comprend une pluralité d'arêtes 91 s'étendant chacune selon une direction d'arête A.

Lorsque ces rails latéraux simples 59 sont disposés sur les murs latéraux 16, 17 correspondants, les directions d'arêtes A s'étendent selon l'axe Z.

Les arêtes 91 de ces rails latéraux simples 59 sont destinées à être reçues dans les rainures 31 lorsque les packs batterie 20 définissant ces rainures 31 sont mis en regard de ces rails.

Les rails latéraux taraudés 60 sont configurés pour renforcer les rails latéraux simples 59 d'au moins certaines couches de packs batterie 20.

Ainsi, dans l'exemple de réalisation de la figure 6, un rail latéral taraudé 60 est disposé au-dessus du rail latéral simple 59 sur la première contremarche du plancher 18.

Tout comme les rails latéraux simples, le rail latéral taraudé 60 définit une pluralité d'arêtes 92 qui sont alors analogues aux arêtes 91 décrites précédemment.

Chacune de ces arêtes 92 s'étend selon une direction d'arête B qui est alors parallèle aux directions d'arête A des arêtes 91.

Par ailleurs, lorsqu'un rail latéral simple 59 et un rail latéral taraudé 60 sont disposés sur une même contremarche, les directions A et B de ces arêtes 91 et 92 sont confondues.

À la différence des rails latéraux simples 59, le rail latéral taraudé 60 définit pour chaque arête 92 un trou taraudé s'étendant selon la direction d'arête B correspondante.

Ce trou taraudé est destiné à recevoir l'extrémité filetée 78 d'une vis de fixation 58 fixant un croisillon 57 dont la paroi inférieure 65 est en contact avec ce rail latéral taraudé 60.

Avantageusement, le système de fixation selon l'invention comprend en outre une pluralité de coussins latéraux 94 qui sont destinés à être disposés sur les murs latéraux 16, 17 au-dessus des rails latéraux simples 59 et éventuellement, au-dessous des rails latéraux taraudés 60 correspondants.

Ces coussins latéraux 94 permettent d'amortir des mouvements latéraux des packs batterie 20 contre les murs latéraux 16, 17.

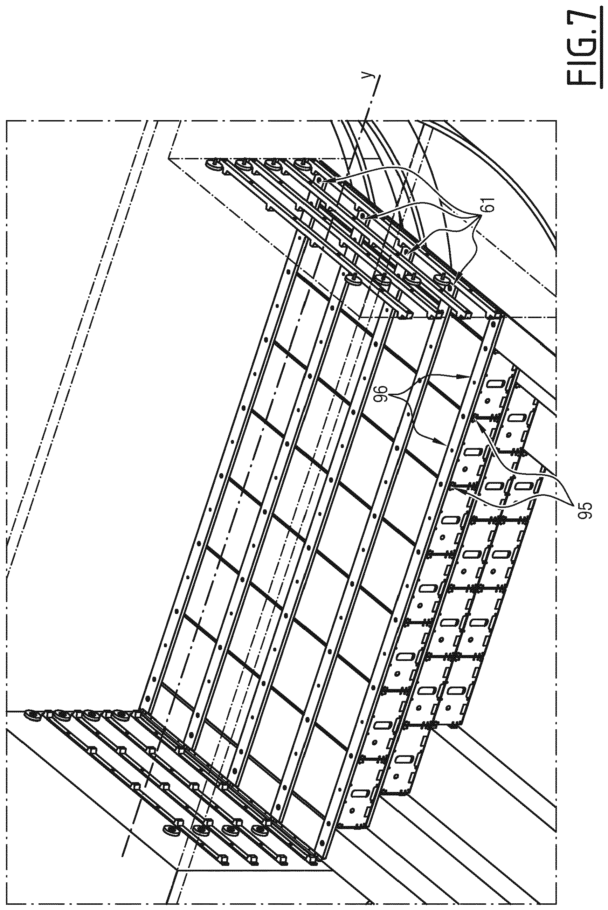

Comme cela est visible sur la figure 7, les règles taraudées 61 permettent de fixer une couche de packs batterie 20 sur une autre couche de packs batterie lorsque les packs batterie 20 de ces dernières couches sont disposés en quinconce par rapport aux packs batterie 20 de la couche inférieure.

Ainsi, en référence à la figure 7, les règles taraudées 61 s'étendent selon l'axe Y.

Chaque règle taraudée 61 définit une pluralité de trous taraudés et une pluralité de trous de fixation.

Sur la figure 7, deux trous de fixation adjacents sont désignés par les références 95 et deux trous taraudés adjacents sont désignés par la référence 96.

Ainsi, chaque trou de fixation 95 est disposé en regard d'un trou taraudé formé dans la couche inférieure de packs batterie.

Comme expliqué précédemment, ce trou taraudé formé dans la couche inférieure de packs batterie est notamment formé par le croisillon 57 inséré entre les orifices des rainures 31 correspondantes.

Ce trou de fixation 95 permet alors de fixer la règle taraudée 61 correspondante sur la couche inférieure de packs batterie au moyen de vis adaptées.

Quant aux trous taraudés 96, ceux-ci permettent de fixer les packs batterie 20 de la couche supérieure de packs batterie par coopération avec les vis de fixation 58 insérées alors dans les croisillons 57 en regard de ces trous taraudés 96.

Avantageusement selon l'invention, les trous taraudés 96 et les trous de fixation 95 sont formés en utilisant un même gabarit avec une distance régulière entre eux.

Cette distance correspond alors à la moitié de l'étendue de chaque pack batterie 20 selon l'axe Y lorsque celui-ci est fixé dans le local batterie 13.

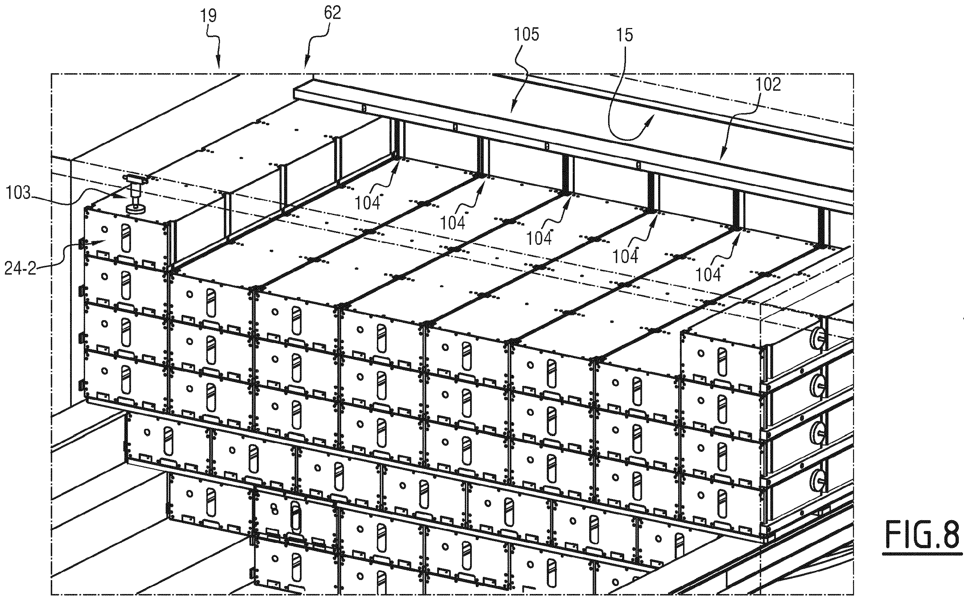

Finalement, en référence à la figure 8, les moyens de fixation de la dernière couche de packs batterie comprennent un cadre de fixation de fond 102 et une pluralité de pieds réglables 103.

Le cadre de fixation de fond 102 est destiné à être fixé sur le mur de fond 15 au niveau de la dernière couche de packs batterie.

Ce cadre de fixation 102 définit une pluralité de cellules, chaque cellule étant adaptée pour recevoir l'un des packs batterie 20 de la dernière couche de packs batterie selon l'axe X pour bloquer ce pack selon l'axe Y et l'axe Z au niveau de sa paroi distale 24-1.

Ainsi, et comme cela est illustré sur la figure 8, chaque cellule présente deux barres latérales 104 destinées à être adjacentes aux parois latérales 22-1, 22-2 du pack batterie 20 lorsque celui-ci est inséré dans cette cellule.

De plus, chaque barre latérale 104 est configurée pour être disposée dans les orifices formés par les rainures 31 en regard adjacents aux parois distales 24-1 des packs batterie 20 formant cette dernière couche de packs batterie.

Chaque cellule 104 est délimitée en outre par une barre supérieure 105 qui est alors destinée à venir en appui contre la paroi supérieure 22-1 de chaque pack batterie 20 lorsque celui-ci est inséré dans la cellule correspondante.

Chaque pied réglable 103 est destiné à être disposé entre l'un des packs 20 de la dernière couche de packs batterie et le plafond 19 pour bloquer ce pack selon l'axe Z au niveau de sa paroi proximale 24-2.

Sur la figure 8, un seul pied réglable 103 est visible.

Le procédé de fixation des packs batteries 20 selon l'invention par le système de fixation selon le premier mode de réalisation de l'invention sera désormais expliqué en référence notamment à la figure 9.

Initialement, il est considéré que le plancher 18 définit des orifices taraudés nécessaires pour coopérer avec les extrémités filetées 78 des vis de fixation 58 destinées à fixer la première couche de packs batterie à travers les croisillons 57 correspondants.

Plus particulièrement, la portion plate du plancher 18 définit pour chaque couple de rainures 31 en regard de chaque couple de packs batterie 20 adjacents destinés à former la première couche un orifice de passage taraudé en regard de cette rainure.

Par ailleurs, lorsque les croisillons 57 selon le premier exemple de réalisation sont utilisés, les orifices formés sur le plancher 18 sont décalés par rapport à l'axe de symétrie des orifices formés entre les rainures en regard correspondantes.

Lorsque les croisillons 57 selon le deuxième exemple de réalisation sont utilisés, les trous sont formés sur le plancher 18 sur l'axe de symétrie des orifices entre les rainures en regard correspondantes.

Dans les deux cas, pour former ces orifices, un gabarit prévu à cet effet peut être utilisé. Il est de même en ce qui concerne les portions cascadées du plancher 18 dans lesquels des trous taraudés sont formés de manière similaire.

En outre, il est considéré qu'un couple de rails latéraux simples 59 est disposé pour chaque couche de packs batterie sur les murs latéraux 16, 17 correspondants.

Avantageusement, au moins pour la première couche de packs batterie, un couple de rails latéraux taraudés est disposé sur les murs latéraux 16, 17 correspondants.

Encore avantageusement, pour chaque couche de packs batterie, au moins un couple de coussins 94 est monté sur chaque mur latéral 16, 17 au-dessus des rails latéraux simples 59 correspondants.

Lors d'une première étape du procédé, un opérateur constitue une première couche de packs batterie en posant d'abord les packs batterie 20 destinés à être adjacents aux murs latéraux 16, 17 puis en complétant cette couche avec les packs batterie 20 restants.

Puis, l'opérateur serre les croisillons 57 dans les orifices formés entre chaque couple des rainures en regard des packs batterie de la première couche formée.

Puis, l'opérateur serre les vis de fixation 58 dans les orifices traversants 69 des croisillons 57 insérés.

Puis, l'opérateur serre ces vis de fixation 58 dans les orifices traversants 69 jusqu'à venir en butée contre les butées internes 70 de ces orifices.

Puis, l'opérateur constitue une deuxième couche de packs batterie qui est par exemple posée de manière alignée avec la première couche de packs batterie. Dans ce cas, l'opérateur effectue les mêmes étapes que celles décrites précédemment.

En particulier, lorsque les croisillons 57 selon le premier exemple de réalisation sont utilisés, pour former cette deuxième couche de packs batterie, l'opérateur insère les croisillons 57 de manière inversée par rapport aux croisillons 57 de la première couche de packs batterie.

Autrement dit, les croisillons 57 de cette deuxième couche de packs batterie sont tournés autour de l'axe Z selon 180° par rapport aux croisillons 57 de la première couche de packs batterie de sorte que les axes d'orifice D₁ et les axes de trou D₂ des croisillons 57 de cette deuxième couche coïncident respectivement avec les axes de trou D₂ et les axes d'orifice D₁ de cette première couche de packs batterie.

Ainsi, lorsque les vis de fixation 58 sont engagées dans les orifices traversants 69 des croisillons 57 de la deuxième couche de packs batterie, les extrémités filetées 78 de ces vis 58 sont engagées dans les trous taraudés 72 des croisillons 57 de la première couche de packs batterie.

Lorsque les croisillons 57 selon le deuxième mode de réalisation sont utilisés, il n'est pas nécessaire de tourner les croisillons 57 de la deuxième couche de packs batterie car les axes d'orifice et de trous de ces croisillons 57 sont confondus.

Les couches suivantes intermédiaires disposées d'une manière alignée peuvent alors être disposées de la même façon.

Lorsqu'il est nécessaire de disposer une couche de packs batterie en quinconce avec la couche inférieure de packs batterie posée, l'opérateur pose d'abord les règles taraudées 61 puis, il fixe ces règles à la couche inférieure de packs batterie ou sur le plancher 18 en insérant des vis correspondantes dans les trous de fixation 95 formés sur ces règles taraudées 61.

Puis, l'opérateur dispose la couche supérieure de packs batterie au-dessus de ces règles taraudées 61 en quinconce par rapport aux packs batterie de la couche inférieure de packs batterie.

Puis, comme dans les cas précédents, l'opérateur insère les croisillons 57 correspondants et visse les vis de fixation 58 à travers ces croisillons dans les trous taraudés 96 formés sur ces règles taraudées 61.

Lorsque l'opérateur arrive à la constitution de la dernière couche de packs batterie, le cadre de fixation de fond est déjà préalablement monté sur le mur de fond 15 du local 13.

Ainsi, l'opérateur insère chaque pack batterie 20 dans les cellules correspondantes de ce cadre de fixation 102.

À la fin, l'opérateur dispose les pieds réglables 103 entre le plafond 19 et les packs batterie 20 de la dernière couche de packs batterie et actionne alors ces pieds réglables 103 pour bloquer la dernière couche de packs batterie contre le plafond 19.

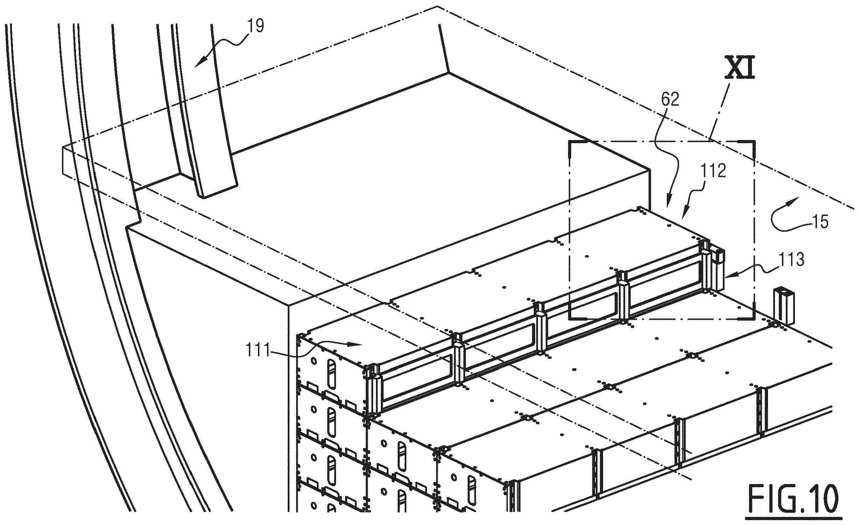

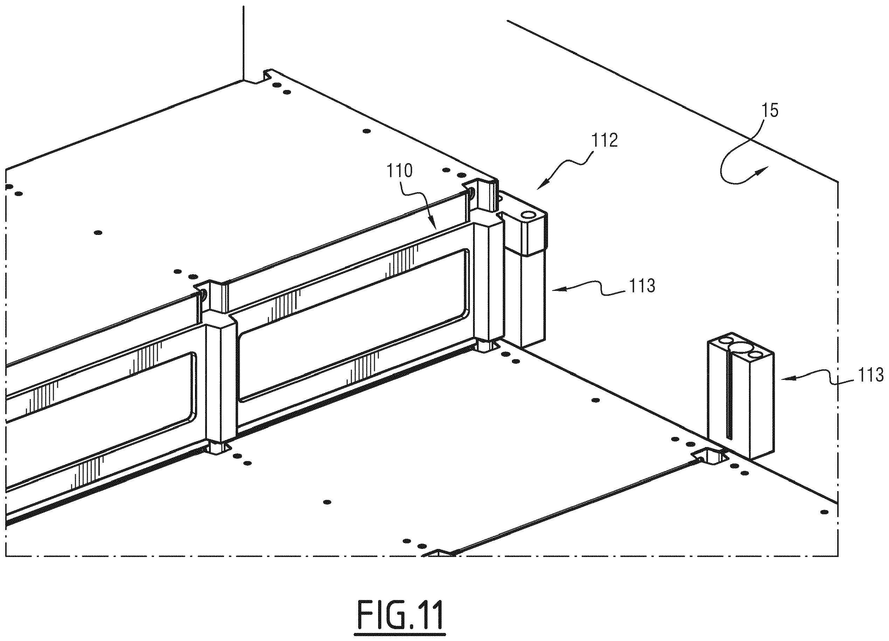

Le système de fixation selon le deuxième mode de réalisation sera désormais expliqué en référence aux figures 10 et 11.

En particulier, ce système de fixation est sensiblement analogue à celui du premier mode de réalisation.

La seule différence de ces deux modes de réalisation consiste en les moyens de fixation 62 de la dernière couche de packs batterie.

En particulier, selon ce deuxième mode de réalisation, ces moyens 62 comprennent une pluralité de cadres de fixation longitudinale 110 et une pluralité de butées de fond 113.

Les butées de fond 113 sont destinées à être fixées sur le mur de fond 15 de sorte à être à cheval en regard de chaque couple des parois distales 24-1 des packs batterie 20 formant la dernière couche.

Chaque cadre de fixation longitudinale 110 est destiné à être fixé entre chaque coupe de packs batterie adjacents de la dernière couche de packs batterie.

Pour ce faire, chaque cadre de fixation longitudinale 110 définit un point de fixation proximale 110 et un point de fixation distale 112.

Chaque point de fixation proximale 111 est destinée à fixer la cadre 110 correspondant aux parois proximales 24-2 du couple correspondant de packs batterie 20.

Chaque point de fixation distale 112 est destinée à fixer le cadre 110 correspondant à la butée de fond 113 disposé en regard de ce point de fixation. Ce point de fixation distale 112 présente par exemple une butée apte à venir en butée contre la butée de fond 113 correspondante et à être fixée sur cette butée de fond au moyen par exemple d'une paire de vis.

Chaque cadre fixation longitudinale 110 définit en outre une pluralité de barres, chaque barre est destinée à être reçue dans un orifice formé entre deux rainures 31 en regard des packs batterie 20 correspondant.

Le procédé de fixation du pack batterie 20 au moyen du système de fixation selon le deuxième mode de réalisation diffère de celui selon le premier mode de réalisation uniquement par la dernière étape consistant à bloquer la dernière couche de packs batterie.

Ainsi, dans ce procédé, les packs batterie 20 de la dernière couche de packs batterie sont d'abord glissés selon l'axe X pour constituer la dernière couche.

Puis, les cadres de fixation longitudinale 112 sont mis dans l'espace entre cette dernière couche et le plafond 19.

Puis, ces cadres sont insérés dans les fentes formées entre chaque couple de packs adjacents afin d'engager les barres dans les orifices formés entre les rainures 31 en regard.

Puis, via des trappes prévues à cet effet dans le plafond 19, les points de fixation distale 112 sont fixés aux butées de fond 113 en utilisant par exemple des vis.

À la fin, des vis sont vissés dans les points de fixation proximale 111 afin de fixer les cadres de fixation longitudinale 110 au niveau des parois proximales 24-2 des packs batterie 20.

Ces vis sont alors vissées dans les trous taraudés formés sur la couche inférieure de packs batterie.

On conçoit alors que la présente invention présente un certain nombre d'avantages.

En effet, l'invention permet de fixer des packs batterie en plusieurs couches dans un espace très restreint et subissant des chocs importants, tel qu'un navire.

La fixation s'effectue d'une manière simple tout en permettant de bloquer l'ensemble des packs batterie selon les trois axes X, Y et Z.

En outre, l'invention utilise des croisillons identiques pour différentes fonctions ce qui permet de réduire le nombre d'éléments différents nécessaires pour effectuer une telle fixation.

## Revendications

1. Bloc d'alimentation (11) d'un navire, le navire comportant un local batterie (13) dont la longueur s'étend selon un axe X et est délimitée par un mur de fond (15), la largeur s'étend selon un axe Y et est délimitée par deux murs latéraux (16, 17) et la hauteur s'étend selon un axe Z et est délimitée par un plancher (18) et un plafond (19) ;
le bloc d'alimentation (11) comprenant une pluralité de packs batterie (20) fixés de façon empilée les uns sur les autres ;
chaque pack batterie (20) présentant une forme sensiblement parallélépipédique définissant deux parois latérales (22-1, 22-2), une paroi proximale (24-1), une paroi distale (24-2), une paroi supérieure (23-2), et une paroi inférieure (23-1), chaque paroi latérale (22-1, 22-2) définissant une pluralité de rainures (31) s'étendant selon un axe d'extension entre la paroi inférieure (23-1) et la paroi supérieure (23-2) ;
le bloc d'alimentation (11) étant destiné à être installé dans le local batterie (13) de sorte que les packs batterie (20) soient posés en plusieurs couches sur le plancher (18) du local batterie (13) entre ses murs latéraux (16, 17) et contre le mur de fond (15), les packs batterie (20) d'une même couche étant destinés à être posés l'un à côté de l'autre de façon adjacente par leur paroi latérale (22-1, 22-2) de sorte que les rainures (31) de ces parois latérales (22-1, 22-2) soient disposées en regard et de sorte que les parois distales (24-2) de ces packs soient adjacentes au mur de fond (15) ;
le bloc d'alimentation (11) comprenant en outre un système de fixation pour fixer les packs batterie (20) dans le local batterie (13),
le système comprenant :
- une pluralité de croisillons (57), chaque croisillon (57) définissant une paroi inférieure (65), une paroi supérieure (66) et un orifice traversant épaulé (69) définissant une butée interne (70) et s'étendant entre les parois inférieure (65) et supérieure (66) de ce croisillon (57) selon un axe d'orifice (D₁), chaque croisillon (57) étant adapté pour être inséré dans un orifice formé entre deux rainures (31) en regard de deux packs batterie (20) mis l'un à côté de l'autre dans une même couche de packs batterie ;
- une pluralité de vis de fixation (58), chaque vis de fixation (58) étant adaptée pour être insérée dans l'orifice traversant épaulé (69) d'un croisillon (57) jusqu'à venir en butée contre la butée interne (70) en traversant partiellement l'orifice traversant épaulé (69), et lorsque ce croisillon (57) est inséré entre deux rainures (31) en regard des packs batterie (20) correspondants, pour être vissée dans un trou taraudé formé en regard de l'orifice traversant épaulé (69), en bloquant ainsi les packs batterie correspondants selon l'axe X.

2. Bloc d'alimentation (11) selon la revendication 1, dans lequel chaque rainure (31) de chaque pack batterie (20) définit une butée inférieure (80) adjacente à la paroi inférieure (23-1) de ce pack batterie sans obturer cette rainure (31) selon son axe d'extension ;
la paroi inférieure (66) de chaque croisillon (57) étant adaptée pour venir en butée contre les butées inférieures (80) de deux rainures (31) en regard lorsque ce croisillon (57) est inséré dans l'orifice formé entre ces rainures (31), et lorsque ce croisillon (57) est fixé par une vis de fixation (58) correspondante, pour bloquer les packs batterie (20) correspondants par coopération avec lesdites butées inférieures (80).

3. Bloc d'alimentation (11) selon la revendication 1 ou 2, dans lequel chaque croisillon (57) définit un trou taraudé (72) débouchant sur la paroi supérieure (66) de celui-ci, s'étendant selon un axe de trou (D₂) parallèle à l'axe d'orifice (D₁) et décalé par rapport à cet axe d'orifice (D₁) ;
le trou taraudé (72) de chaque croisillon (57) étant adapté pour recevoir une vis de fixation (58) fixant un croisillon (57) dont la paroi inférieure (65) est adjacente à la paroi supérieure (66) de ce croisillon (57) et dont l'axe de trou (D₂) et l'axe d'orifice (D₁) sont confondus respectivement avec l'axe d'orifice (D₁) et l'axe de trou (D₂) de ce croisillon (57).

4. Bloc d'alimentation (11) selon la revendication 1 ou 2, dans lequel le système de fixation comprend en outre une pluralité de douilles taraudée (77) ;
chaque douille taraudée (77) étant adaptée pour être insérée dans l'orifice traversant épaulé (69) de chaque croisillon (57) au-dessus de la vis de fixation (58) correspondante pour forme un trou taraudé débouchant sur la paroi supérieure (66) de ce croisillon (57) ;
le trou taraudé formé par chaque douille taraudée (77) insérée dans le croisillon (57) correspondant étant adapté pour recevoir une vis de fixation (58) fixant un croisillon (57) dont la paroi inférieure (65) est adjacente à la paroi supérieure (66) de ce croisillon (57).

5. Bloc d'alimentation (11) selon la revendication 4, dans lequel chaque croisillon (57) présente une symétrie axiale par rapport à l'axe d'orifice (D₁) correspondant.

6. Bloc d'alimentation (11) selon l'une quelconque des revendications précédentes, dans lequel le système de fixation comprend en outre une pluralité de rails latéraux simples (59), chaque rail latéral simple (59) comprenant une pluralité d'arêtes (91) s'étendant selon une direction d'arête (A) et configurées pour être reçues dans les rainures (31) correspondantes lorsque le rail latéral simple (59) est disposé en regard d'une paroi latérale (22-1, 22-2) d'un pack batterie (22) ;
chaque rail latéral simple (59) étant destiné à être monté sur un mur latéral (16, 17) du local batterie (13) en regard d'une paroi latérale (22-1, 22-2) d'un pack batterie (20) de chaque couche de packs batterie de sorte que la direction d'arête (A) soit parallèle à l'axe Z.

7. Bloc d'alimentation (11) selon l'une quelconque des revendications précédentes, dans lequel le système de fixation comprend en outre une pluralité de rails latéraux taraudés (60), chaque rail latéral taraudé (60) comprenant une pluralité d'arêtes (92) s'étendant selon une direction d'arête (B) et configurées pour être reçues dans les rainures (31) correspondantes lorsque le rail latéral taraudé (60) est disposé en regard d'une paroi latérale (22-1, 22-2) d'un pack batterie (20) ;
chaque rail latéral taraudé (60) étant destiné à être monté sur un mur latéral (16, 17) du local batterie (13) en regard d'une paroi latérale (22-1, 22-2) d'un pack batterie (20) d'au moins une couche de packs batterie de sorte que la direction d'arête (B) soit parallèle à l'axe Z ;
chaque rail latéral taraudé (60) formant pour chaque arête (92) un trou taraudé s'étendant selon la direction d'arête (B) correspondante et destiné à recevoir une vis de fixation (58) fixant un croisillon (57) dont la paroi inférieure (65) est adjacente à ce rail latéral taraudé (60).

8. Bloc d'alimentation (11) selon l'une quelconque des revendications précédentes, dans lequel le système comprend en outre une pluralité de règles taraudées (61), chaque règle (61) étant destinée à être disposée le long de l'axe Y entre une couche inférieure de packs batterie et une couche supérieure de packs batterie posée en quinconce par rapport à cette couche inférieure de packs batterie ;
chaque règle (61) définissant une pluralité de trous taraudés (96) et une pluralité de trous de fixation (95) et lorsque cette règle (61) est posée entre les couches de packs batterie correspondantes :
chaque trou de fixation (95) étant disposé en regard d'un trou taraudé formé dans la couche inférieure de packs batterie ;
chaque trou taraudé (96) étant disposé en regard d'une vis de fixation (58) fixant un croisillon (57) disposé entre deux packs batterie de la couche supérieure de packs batterie.

9. Bloc d'alimentation (11) selon l'une quelconque des revendications précédentes, dans lequel le système comprend en outre un cadre de fixation (102) de fond définissant une pluralité de cellules et destiné à être fixé sur le mur de fond (15) du local batterie (13) en regard des packs batterie (20) d'une dernière couche de packs batterie ;
chaque cellule étant adaptée pour recevoir un pack batterie (20) selon l'axe X et pour bloquer ce pack (20) selon l'axe Y et l'axe Z au niveau des parois distales (24-1) de ces packs (20).

10. Bloc d'alimentation (11) selon la revendication 9, dans lequel le système comprend en outre une pluralité de pieds réglables (103), chaque pied réglable (103) étant apte être disposé entre un pack batterie (20) de la dernière couche de packs batterie et le plafond (19) pour bloquer ce pack batterie (20) selon l'axe Z au niveau de sa paroi proximale (24-2).

11. Bloc d'alimentation (11) selon l'une quelconque des revendications 1 à 8, dans lequel le système comprend en outre une pluralité de cadres de fixation longitudinale (110) destinés à être fixés entre deux packs batterie (20) adjacents d'une dernière couche de packs batterie ;
chaque cadre de fixation (110) comprenant un point de fixation distale (112) destiné à être fixé au mur de fond (15) et un point de fixation proximale (111) destiné à être fixé au niveau des parois proximales (24-2) des packs batterie (20) correspondants.

12. Bloc d'alimentation selon la revendication 11, dans lequel chaque cadre de fixation longitudinale (110) définit une pluralité de barres, chaque barre étant destinée à être reçue dans un orifice formé entre deux rainures (31) en regard des deux packs batterie (20) adjacents entre lesquels ce cadre de fixation (110) est destiné à être fixé.

13. Procédé de fixation d'une pluralité de packs batterie (20) de façon empilée les uns sur les autres à bord d'un navire, mis en oeuvre au moyen du système de fixation du bloc d'alimentation (11) selon l'une quelconque des revendications précédentes et comportant les étapes suivantes :
- constituer une première couche de packs batterie ou une couche de packs batterie intermédiaire en posant chaque pack batterie (20) sur le plancher (18) couvert d'une mousse parasismique ou sur un pack batterie (20) d'une couche de packs batterie inférieure ou à cheval entre deux packs batterie (20) d'une couche de packs batterie inférieure ;
- insérer les croisillons (57) dans les orifices formés entre chaque couple des rainures (31) en regard des packs batterie (20) de la couche constituée ;
- insérer les vis de fixation dans les orifices traversants épaulés des croisillons (57) insérés ;
- sérer les vis de fixation (58) dans les trous taraudés en regard des orifices traversants épaulés (69) jusqu'à venir en butée contre les butées internes (70) de ces orifices (69) ;
- constituer une dernière couche de packs batterie en posant chaque pack batterie (20) sur un pack batterie (20) d'une couche de packs batterie inférieure ou à cheval entre deux packs batterie (20) d'une couche de packs batterie inférieure ;
- bloquer la dernière couche de packs batterie selon l'axe Z.

## Patentansprüche

1. Stromversorgungseinheit (11) eines Schiffs, wobei das Schiff einen Batterieraum (13) umfasst, dessen Länge sich gemäß einer X-Achse erstreckt und von einer Rückwand (15) begrenzt ist, wobei sich die Breite gemäß einer Y-Achse erstreckt und von zwei Seitenwänden (16, 17) begrenzt ist und sich die Höhe gemäß einer Z-Achse erstreckt und von einem Boden (18) und einer Decke (19) begrenzt ist;
wobei die Stromversorgungseinheit (11) eine Vielzahl von Batteriepacks (20) umfasst, die übereinandergestapelt befestigt sind;
wobei jeder Batteriepack (20) eine im Wesentlichen parallelepipedische Form aufweist, die zwei Seitenwände (22-1, 22-2), eine proximale Wand (24-1), eine distale Wand (24-2), eine obere Wand (23-2) und eine untere Wand (23-1) definiert, wobei jede Seitenwand (22-1, 22-2) eine Vielzahl von Nuten (31) definiert, die sich gemäß einer Erstreckungsachse zwischen der unteren Wand (23-1) und der oberen Wand (23-2) erstrecken;
wobei die Stromversorgungseinheit (11) dazu bestimmt ist, im Batterieraum (13) derart installiert zu sein, dass die Batteriepacks (20) in mehreren Schichten auf dem Boden (18) des Batterieraums (13) zwischen seinen Seitenwänden (16, 17) und an der Rückwand (15) aufgestellt sind, wobei die Batteriepacks (20) einer gleichen Schicht dazu bestimmt sind, nebeneinander durch ihre Seitenwand (22-1, 22-2) benachbart derart angeordnet zu sein, dass die Nuten (31) dieser Seitenwände (22-1, 22-2) zugewandt und derart angeordnet sind, dass die distalen Wände (24-2) dieser Packs zu der Rückwand (15) benachbart sind;
wobei die Stromversorgungseinheit (11) ferner ein Befestigungssystem zum Befestigen der Batteriepacks (20) im Batterieraum (13) umfasst,
wobei das System umfasst:
- eine Vielzahl von Kreuzverstrebungen (57), wobei jede Kreuzverstrebung (57) eine untere Wand (65), eine obere Wand (66) und eine stufige Durchgangsöffnung (69) definiert, die einen inneren Anschlag (70) definiert und sich zwischen der unteren (65) und der oberen Wand (66) dieser Kreuzverstrebung (57) gemäß einer Öffnungsachse (D₁) erstreckt, wobei jede Kreuzverstrebung (57) geeignet ist, in eine Öffnung eingesetzt zu sein, die zwischen zwei Nuten (31) zwei Batteriepacks (20) zugewandt gebildet ist, die nebeneinander in einer gleichen Batteriepackschicht angeordnet sind;
- eine Vielzahl von Befestigungsschrauben (58), wobei jede Befestigungsschraube (58) geeignet ist, in die stufige Durchgangsöffnung (69) einer Kreuzverstrebung (57) eingeführt zu sein, bis sie am inneren Anschlag (70) anschlägt, indem sie die stufige Durchgangsöffnung (69) teilweise durchquert, und wenn diese Kreuzverstrebung (57) zwischen zwei Nuten (31) den entsprechenden Batteriepacks (20) zugewandt eingeführt ist, um in einem Gewindeloch verschraubt zu sein, das der stufigen Durchgangsöffnung (69) zugewandt ausgebildet ist, wodurch somit die entsprechenden Batteriepacks gemäß der X-Achse arretiert werden.

2. Stromversorgungseinheit (11) nach Anspruch 1, wobei jede Nut (31) jedes Batteriepacks (20) einen unteren Anschlag (80) neben der unteren Wand (23-1) dieses Batteriepacks definiert, ohne diese Nut (31) gemäß ihrer Erstreckungsachse zu verschließen;
wobei die untere Wand (66) jeder Kreuzverstrebung (57) geeignet ist, an den unteren Anschlägen (80) von zwei zugewandten Nuten (31) anzuschlagen, wenn diese Kreuzverstrebung (57) in die Öffnung eingeführt ist, die zwischen diesen Nuten (31) ausgebildet ist und wenn diese Kreuzverstrebung (57) durch eine entsprechende Befestigungsschraube (58) befestigt ist, um die entsprechenden Batteriepacks (20) durch Zusammenwirken mit den unteren Anschlägen (80) zu arretieren.

3. Stromversorgungseinheit (11) nach Anspruch 1 oder 2, wobei jede Kreuzverstrebung (57) ein Gewindeloch (72) definiert, das auf der oberen Wand (66) derselben ausmündet, sich gemäß einer Lochachse (D₂) parallel zu der Öffnungsachse (D₁) und versetzt zu dieser Öffnungsachse (D₁) erstreckt;
wobei das Gewindeloch (72) jeder Kreuzverstrebung (57) geeignet ist, eine Befestigungsschraube (58) aufzunehmen, die eine Kreuzverstrebung (57) befestigt, deren untere Wand (65) der oberen Wand (66) dieser Kreuzverstrebung (57) benachbart ist und deren Lochachse (D₂) und Öffnungsachse (D₁) jeweils mit der Öffnungsachse (D₁) und der Lochachse (D₂) dieser Kreuzverstrebung (57) zusammenfallen.

4. Stromversorgungseinheit (11) nach Anspruch 1 oder 2, wobei das Befestigungssystem ferner eine Vielzahl von Gewindebuchsen (77) umfasst;
wobei jede Gewindebuchse (77) geeignet ist, in die stufige Durchgangsöffnung (69) jeder Kreuzverstrebung (57) oberhalb der entsprechenden Befestigungsschraube (58) eingeführt zu sein, um ein Gewindeloch zu bilden, das auf der oberen Wand (66) dieser Kreuzverstrebung (57) ausmündet;
wobei das Gewindeloch, das von jeder Gewindebuchse (77) gebildet ist, die in die entsprechende Kreuzverstrebung (57) eingeführt ist, geeignet ist, eine Befestigungsschraube (58) aufzunehmen, die eine Kreuzverstrebung (57) befestigt, deren untere Wand (65) der oberen Wand (66) dieser Kreuzverstrebung (57) benachbart ist.

5. Stromversorgungseinheit (11) nach Anspruch 4, wobei jede Kreuzverstrebung (57) eine axiale Symmetrie im Verhältnis zu der entsprechenden Öffnungsachse (D₁) aufweist.

6. Stromversorgungseinheit (11) nach einem der vorherigen Ansprüche, wobei das Befestigungssystem ferner eine Vielzahl einfacher seitlicher Schienen (59) umfasst, wobei jede einfache seitliche Schiene (59) eine Vielzahl von Kanten (91) umfasst, die sich gemäß einer Kantenrichtung (A) erstrecken und dazu ausgelegt sind, in den entsprechenden Nuten (31) aufgenommen zu sein, wenn die einfache seitliche Schiene (59) einer Seitenwand (22-1, 22-2) eines Batteriepacks (22) zugewandt angeordnet ist;
wobei jede einfache seitliche Schiene (59) dazu bestimmt ist, an einer Seitenwand (16, 17) des Batterieraums (13) einer Seitenwand (22-1, 22-2) eines Batteriepacks (20) jeder Batteriepackschicht zugewandt derart angebracht zu sein, dass die Kantenrichtung (A) parallel zur Z-Achse ist.

7. Stromversorgungseinheit (11) nach einem der vorherigen Ansprüche, wobei das Befestigungssystem ferner eine Vielzahl seitlicher Gewindeschienen (60) umfasst, wobei jede seitliche Gewindeschiene (60) eine Vielzahl von Kanten (92) umfasst, die sich gemäß einer Kantenrichtung (B) erstrecken und dazu ausgelegt sind, in den entsprechenden Nuten (31) aufgenommen zu sein, wenn die seitliche Gewindeschiene (60) einer Seitenwand (22-1, 22-2) eines Batteriepacks (20) zugewandt angeordnet ist;
wobei jede seitliche Gewindeschiene (60) dazu bestimmt ist, an einer Seitenwand (16, 17) des Batterieraums (13) einer Seitenwand (22-1, 22-2) eines Batteriepacks (20) mindestens einer Batteriepackschicht zugewandt derart angebracht zu sein, dass die Kantenrichtung (B) parallel zur Z-Achse ist; wobei jede seitliche Gewindeschiene (60) für jede Kante (92) ein Gewindeloch bildet, das sich gemäß der entsprechenden Kantenrichtung (B) erstreckt und dazu bestimmt ist, eine Befestigungsschraube (58) aufzunehmen, die eine Kreuzverstrebung (57) befestigt, deren untere Wand (65) dieser seitlichen Gewindeschiene (60) benachbart ist.

8. Stromversorgungseinheit (11) nach einem der vorherigen Ansprüche, wobei das System ferner eine Vielzahl von Gewindelinealen (61) umfasst, wobei jedes Lineal (61) dazu bestimmt ist, entlang der Y-Achse zwischen einer unteren Batteriepackschicht und einer oberen Batteriepackschicht, die in Bezug zu dieser unteren Batteriepackschicht versetzt ist, angeordnet zu sein;
wobei jedes Lineal (61) eine Vielzahl von Gewindelöchern (96) und eine Vielzahl von Befestigungslöchern (95) definiert und wenn dieses Lineal (61) zwischen den entsprechenden Batteriepackschichten angeordnet ist:
jedes Befestigungsloch (95) einem Gewindeloch zugewandt angeordnet ist, das in der unteren Batteriepackschicht ausgebildet ist;
jedes Gewindeloch (96) einer Befestigungsschraube (58) zugewandt angeordnet ist, die eine Kreuzverstrebung (57) befestigt, die zwischen zwei Batteriepacks der oberen Batteriepackschicht angeordnet ist.

9. Stromversorgungseinheit (11) nach einem der vorherigen Ansprüche, wobei das System ferner einen Rückwandbefestigungsrahmen (102) umfasst, der eine Vielzahl von Zellen definiert und dazu bestimmt ist, an der Rückwand (15) des Batterieraums (13) den Batteriepacks (20) einer letzten Batteriepackschicht zugewandt befestigt zu sein;
wobei jede Zelle geeignet ist, einen Batteriepack (20) gemäß der X-Achse aufzunehmen und diesen Pack (20) gemäß der Y-Achse und der Z-Achse im Bereich der distalen Wände (24-1) dieser Packs (20) zu arretieren.

10. Stromversorgungseinheit (11) nach Anspruch 9, wobei das System ferner eine Vielzahl einstellbarer Füße (103) umfasst, wobei jeder einstellbare Fuß (103) geeignet ist, zwischen einem Batteriepack (20) der letzten Batteriepackschicht und der Decke (19) angeordnet zu sein, um diesen Batteriepack (20) gemäß der Z-Achse im Bereich seiner proximalen Wand (24-2) zu arretieren.

11. Stromversorgungseinheit (11) nach einem der Ansprüche 1 bis 8, wobei das System ferner eine Vielzahl von Längsbefestigungsrahmen (110) umfasst, die zur Befestigung zwischen zwei benachbarten Batteriepacks (20) einer letzten Batteriepackschicht bestimmt sind;
wobei jeder Befestigungsrahmen (110) einen distalen Befestigungspunkt (112) umfasst, der zum Befestigen an der Rückwand (15) bestimmt ist und einen proximalen Befestigungspunkt (111), der zum Befestigen im Bereich der proximalen Wände (24-2) der entsprechenden Batteriepacks (20) bestimmt ist.

12. Stromversorgungseinheit nach Anspruch 11, wobei jeder Längsbefestigungsrahmen (110) eine Vielzahl von Stäben definiert, wobei jeder Stab dazu bestimmt ist, in einer Öffnung aufgenommen zu sein, die zwischen zwei Nuten (31) den beiden benachbarten Batteriepacks (20) zugewandt gebildet ist, zwischen denen dieser Befestigungsrahmen (110) bestimmt ist, befestigt zu sein.

13. Verfahren zum Befestigen einer Vielzahl von übereinandergestapelten Batteriepacks (20) an Bord eines Schiffs, das mittels des Befestigungssystems der Stromversorgungseinheit (11) nach einem der vorherigen Ansprüche durchgeführt wird und die folgenden Schritte umfasst:
- Bilden einer ersten Batteriepackschicht oder einer zwischenliegenden Batteriepackschicht, indem jeder Batteriepack (20) auf den mit erdbebensicherem Schaumstoff bedeckten Boden (18) oder auf einen Batteriepack (20) einer unteren Batteriepackschicht oder rittlings zwischen zwei Batteriepacks (20) einer unteren Batteriepackschicht gelegt wird;
- Einführen der Kreuzverstrebungen (57) in die Öffnungen, die zwischen jedem Paar der Nuten (31) gebildet sind, die den Batteriepacks (20) der gebildeten Schicht zugewandt sind;
- Einführen der Befestigungsschrauben in die stufigen Durchgangslöcher der eingesetzten Kreuzverstrebungen (57);
- Spannen der Befestigungsschrauben (58) in den Gewindelöcher den stufigen Durchgangsöffnungen (69) zugewandt, bis sie an den inneren Anschlägen (70) dieser Öffnungen (69) anliegen;
- Bilden einer letzten Batteriepackschicht, indem jeder Batteriepack (20) auf ein Batteriepack (20) einer unteren Batteriepackschicht oder rittlings zwischen zwei Batteriepacks (20) einer unteren Batteriepackschicht gelegt wird;
- Arretieren der letzten Batteriepackschicht gemäß der Z-Achse.

## Claims

1. Power supply unit (11) of a vessel, the vessel having a battery room (13), the length of which extends along an X axis and is delimited by a back wall (15), the width extends along a Y axis and is delimited by two side walls (16, 17), and the height extends along a Z axis and is delimited by a floor (18) and a ceiling (19);
the power supply (11) comprising a plurality of battery packs (20) fixed in a stacked manner on top of one another;
each battery pack (20) having a substantially parallelepipedal shape defining two side walls (22-1, 22-2), a proximal wall (24-1), a distal wall (24-2), an upper wall (23-2), and a lower wall (23-1), each side wall (22-1, 22-2) defining a plurality of grooves (31);
the power supply unit (11) being designed to be installed in the battery room (13) so that the battery packs (20) are laid in several layers on the floor (18) of the battery room (13) between its side walls (16,17) and against the back wall (15), the battery packs (20) of the same layer being designed to be disposed next to the adjacent one via their side wall (22-1 , 22-2) so that the grooves (31) of these side walls (22-1, 22-2) are disposed to face each other and the distal walls (24-2) of these packs are adjacent to the wall bottom (15);
the power supply unit (11) further comprising a fastening system for fixing the battery packs (20) in the battery room (13).
the system comprising:
- a plurality of braces (57), each brace (57) defining a lower wall (65), an upper wall (66) and a shouldered through-orifice (69) defining an internal stop (70) and extending between the lower (65) and upper (66) walls of this brace (57) along an orifice axis (D₁), each brace (57) being designed to be inserted into an orifice formed between two grooves (31) of two facing battery packs (20) disposed next to each other in a same layer of battery packs;
- a plurality of fixing screws (58), each fixing screw (58) being designed to be inserted into the shouldered through-orifice (69) of a brace (57) until it abuts against the internal stop (70) by partially passing through the shouldered through-orifice (69), and, when this brace (57) is inserted between two grooves (31) facing the corresponding battery packs (20), being screwed into a tapped hole facing the shouldered through-orifice (69), thus securing the corresponding battery packs along the X axis.

2. The power supply unit (11), wherein each groove (31) of each battery pack (20) defines a lower stop (80) adjacent to the lower wall (23-1) of this battery pack without closing this groove (31) along its axis of extension;
the lower wall (66) of each brace (57) being designed to abut against the lower stops (80) of two facing grooves (31) when this brace (57) is inserted into the orifice formed between these grooves (31), and when this brace (57) is fixed by a corresponding fixing screw (58) to secure the corresponding battery packs (20) by interaction with said lower stops (80).

3. The power supply unit (11) according to claim 1 or 2, wherein each brace (57) defines a tapped hole (72) opening onto the upper wall (66) thereof, extending along a hole axis (D₂) parallel to the orifice axis (D₁) and offset with respect to this orifice axis (D₁);
the tapped hole (72) of each brace (57) being designed to receive a fixing screw (58) fixing a brace (57) whose lower wall (65) is adjacent to the upper wall (66) of this brace (57) and the hole axis (D₂) and the orifice axis (D₁) of which coincide respectively with the orifice axis (D₁) and the hole axis (D₂) of this brace (57).

4. The power supply unit (11) according to claim 1 or 2, further comprising a plurality of threaded sleeves (77);
each threaded sleeve (77) being designed to be inserted into the shouldered through-orifice (69) of each brace (57) above the corresponding fixing screw (58) to form a tapped hole opening out onto the upper wall (66) of this brace (57);
the tapped hole formed by each threaded sleeve (77) inserted in the corresponding brace (57) being designed to receive a fixing screw (58) fixing a brace (57) whose lower wall (65) is adjacent to the upper wall (66) of this brace (57).

5. The power supply unit (11) according to claim 4, wherein each brace (57) has an axial symmetry with the axis of the corresponding orifice (D₁).

6. The power supply unit (11) according to any preceding claim, further comprising a plurality of simple side rails (59), each simple side rail (59) comprising a plurality of protuberances (91) extending in a protuberance direction (A) and designed to be received in the corresponding grooves (31) when the simple side rail (59) is disposed facing a side wall (22-1, 22-2) of a battery pack (22);
each simple side rail (59) being designed to be mounted on a side wall (16, 17) of the battery room (13) facing a side wall (22-1, 22-2) of a battery pack (20) of each layer of battery packs so that the protuberance direction (A) is parallel to the Z axis.

7. The power supply unit (11) according to any preceding claim, further comprising a plurality of threaded side rails (60), each threaded side rail (60) comprising a plurality of protuberances (92) extending in a protuberance direction (B) and designed to be received in the corresponding grooves (31) when the threaded side rail (60) is disposed facing a side wall (22-1, 22-2) of a battery pack (20);
each threaded side rail (60) being designed to be mounted on a side wall (16, 17) of the battery room (13) facing a side wall (22-1, 22-2) of a battery pack (20) of at least one layer of battery packs so that the protuberance direction (B) is parallel to the Z axis;
each tapped side rail (60) forming for each protuberance (92) a tapped hole extending in the corresponding protuberance direction (B) and designed to receive a fixing screw (58) fixing a brace (57) whose wall lower (65) is adjacent to this threaded side rail (60).

8. The power supply unit (11) according to any one of the preceding claims, further comprising a plurality of threaded rules (61), each rule (61) being designed to be disposed along the Y axis between a lower layer of battery packs and an upper layer of battery packs disposed staggered with respect to this lower layer of battery packs;
each rule (61) defining a plurality of tapped holes (96) and a plurality of fixing holes (95) and when this rule (61) is laid between the corresponding battery pack layers:
each fixing hole (95) being disposed opposite a tapped hole formed in the lower layer of battery packs;
each tapped hole (96) being disposed opposite a fixing screw (58) fixing a brace (57) disposed between two battery packs of the upper layer of battery packs.

9. The power supply unit (11) according to any one of the preceding claims, further comprising a bottom fixing frame (102) defining a plurality of cells and designed to be fixed to the back wall (15) of the battery room (13) opposite the battery packs (20) of a last layer of battery packs;
each cell being designed to receive a battery pack (20) along the X axis and to secure this pack (20) along the Y axis and the Z axis at the level of the distal walls (24-1) of these packs (20).

10. The power supply unit (11) according to claim 9, further comprising a plurality of adjustable feet (103), each adjustable foot (103) being designed to be disposed between a battery pack (20) of the last layer of battery packs and the ceiling (19) to secure this battery pack (20) along the Z axis at its proximal wall (24-2).

11. The power supply unit (11) according to any one of claims 1 to 8, further comprising a plurality of longitudinal fixing frames (110) designed to be fixed between two battery packs (20) adjacent to a last layer of battery packs;
each fixing frame (110) comprising a distal fixing point (112) designed to be fixed to the back wall (15), and a proximal fixing point (111) designed to be fixed at the level of the proximal walls (24-2) of the corresponding battery packs (20).

12. The power supply unit (11) according to claim 11, wherein each longitudinal fixing frame (110) defines a plurality of bars, each bar being designed to be received in an orifice formed between two grooves (31) facing the two adjacent battery packs (20) between which this fixing frame (110) is designed to be fixed.

13. A method of fixing a plurality of battery packs (20) stacked on top of one another on board a vessel, implemented by means of the fastening system of the power supply unit (11) according to any one of the preceding claims and comprising the following steps:
- constitute a first layer of battery packs or a layer of intermediate battery packs by placing each battery pack (20) on the floor (18) covered with an earthquake-resistant foam or on a battery pack (20) with a layer of lower battery packs or astride two battery packs (20) of a lower battery pack layer;
- insert the braces (57) into the orifices formed between each pair of grooves (31) facing the battery packs (20) of the layer so formed;
- insert the fixing screws in the shouldered through-orifices in the shouldered braces (57);
- insert the fixing screws (58) in the tapped holes opposite the shouldered through-orifices (69) until they abut against the internal stops (70) of these orifices (69);
- constitute a last layer of battery packs by disposing each battery pack (20) on a battery pack (20) of a lower layer of battery packs or between two battery packs (20) of a lower layer of battery packs;
- secure the last layer of battery packs along the Z axis.
